# EUROPÄISCHE PATENTSCHRIFT

(11) **EP 0 474 966 B1**
(45) Veröffentlichungstag und Bekanntmachung des Hinweises auf die Patenterteilung: **13.09.1995**
(21) Anmeldenummer: 91107353.4
(22) Anmeldetag: 07.05.1991
(51) Int. Cl.: A47B 88/00

(54) **Befestigungsbeschlag für Schubladen-Frontblenden**
Anchorage fitting for drawer front panels
Ferrure de fixation pour panneaux frontaux

(30) Priorität: 21.08.1990 DE 4026407
(43) Veröffentlichungstag der Anmeldung: 18.03.1992
(73) Patentinhaber: MEPLA-WERKE LAUTENSCHLÄGER GmbH & Co. KG, D-64354 Reinheim (DE)
(72) Erfinder: Berger,Horst, W-4800 Bielefeld 16 (DE)
(74) Vertreter: Helber, Friedrich G., Dipl.-Ing.

(56) Entgegenhaltungen:
- DE-A- 3 708 533
- DE-U- 8 600 877
- FR-A- 2 506 143

## Beschreibung

Die Erfindung betrifft einen Beschlag für die verstellbare Befestigung der Frontblende einer Schublade an deren Seitenwänden mit einem an der Frontblende anbringbaren Befestigungsteil und einem lösbar mit dem Befestigungsteil verbindbaren, an der zugehörigen Schubladen-Seitenwand vorgesehenen Halterungsteil, wobei der Befestigungsteil eine im wesentlichen rechtwinklig von der Innenfläche der Frontblende vortretende Befestigungslasche mit parallel zur Schubladen-Seitenwand verlaufenden Flachseiten aufweist, in welcher ein im wesentlichen parallel zur Innenfläche senkrecht verlaufender und an einem Ende offen mündender Längsschlitz vorgesehen ist.

Schubladen werden heute an ihren sichtbaren Vorderseiten überwiegend mit Frontblenden versehen, welche den eigentlichen Schubladenkasten in der Höhen- und Breitenabmessung überragen und somit in der ganz in den zugehörigen Möbelkorpus eingeschobenen Stellung - entsprechend aufschlagenden Türflügeln - seitlich und bei der obersten und untersten Schublade eines Schubladen-Schranks auch mit dem überstehenden oberen bzw. unteren Randbereich auf den Stirnflächen der Korpuswände aufliegen. Dabei entsteht das Problem, daß die Frontblenden zu den Frontblenden von in Höhenrichtung oder seitlich benachbarten Schubladen und/oder den Schrank-Seitenwänden oder benachbarten Türflügeln so ausgerichtet werden müssen, daß sie in geschlossenem Zustand eine ästhetisch befriedigende exakte Ausrichtung haben. Solange die Frontblenden auf der eigentlichen Schubladen-Vorderwand aufgesetzt und mit dieser verschraubt wurden, war eine solche Ausrichtung relativ einfach dadurch möglich, daß die Bohrungen für die von der Schubladen-Innenseite aus durch die Schubladen-Vorderwand in die Frontblende eingeschraubten Befestigungsschrauben in der Vorderwand größer als der Schaft-Durchmesser der Befestigungsschrauben bemessen wurde, so daß ein allseitiges Verschieben der Frontblende in dem durch das Übermaß der Bohrungen vorgegebenen Rahmen bei gelockerten Befestigungsschreiben möglich war. Durch Anziehen der Befestigungsschraube nach der erfolgten Ausrichtung wurden die Frontblenden dann auf der Schubladen-Vorderwand fixiert. In neuerer Zeit werden Schubladen aber zunehmend ohne feste Vorderwand hergestellt, d.h. die Frontblenden stellen gleichzeitig die Vorderwand dar und müssen deshalb mit dem Schubladenkasten starr verbindbar sein, um die Schublade in ihrem vorderen Bereich zu stabilisieren. Andererseits muß aber trotzdem die geschilderte Ausrichtung möglich sein. Hierfür sind Befestigungsbeschläge verschiedener Art entwickelt worden, die zum Teil zusätzlich die Aufgabe der Halterung des Vorderendes der Laufschiene der die Schublade ausziehbar am Schrankkorpus lagernden Ausziehführung übernehmen (DE-A- 36 32 442). Diese Befestigungsbeschläge sind unter dem Schubladenboden auf der Innenfläche der den Boden nach unten überragenden Seitenwand angeordnet. Zur hilfreichen starren Befestigung der Frontblende an den Seitenwänden müssen dann aber - zumindest bei Schubladen großer senkrechter Höhe - noch zusätzliche Befestigungsmittel nach Art von Eckverbindern oberhalb des Bodenniveaus vorgesehen werden, welche ebenfalls eine Einstellung der Frontplatte erlauben müssen und außerdem optisch möglichst wenig in Erscheinung treten sollen. Bei in neuerer Zeit für bestimmte Anwendungsfälle verwendeten Schubladen mit Seitenwänden aus Kunststoff- oder Metall-Hohlkammerprofilen wurden deshalb im Innern der Seitenwand-Hohlprofile angeordnete Befestigungsbeschläge für Frontplatten entwickelt (z.B. EP-A- 0 267 477), bei denen an der Frontblende ein Halterungsteil befestigbar isdt, der in eine Blattfeder einhängbar ist, die ihrerseits in Höhen- und Einschubrichtung der Schublade einstellbar in einem im Innern des Hohlprofils angeordnete Tragteil angeordnet ist. Für die Querverstellung der Frontblende ist der Halteteil außerdem selbst noch einmal so unterteilt, daß diese Teile relativ zueinander in Querrichtung verstellbar sind. Ebenfalls für die Befestigung der Frontblende an Schubladen mit als Kunststoff-Hohlkammerprofilen ausgebildeten Seitenwänden ist ein Befestigungsbeschlag der eingangs erwähnten Art (DE-A- 37 08 533) bekannt, bei dem der Befestigungsteil mit seinem Längsschlitz über einen im frontblendenseitig offenen Ende einer Hohlkammer der jeweiligen Schubladen-Seitenwand durch Stellschrauben lageveränderlich angeordneten Halterungsteil schiebbar und durch Drehen der Stellschrauben in einem gewissen Bereich verstellbar an der jeweiligen Schubladen-Seitenwand befestigbar ist Diese bekannten Beschläge haben einen relativ komplexen Aufbau und sind dementsprechend aufwendig und teuer in der Herstellung.

Neben Schubladen mit Seitenwänden aus den erwähnten Hohlkammerprofilen werden - u.a. auch aus Kostengründen - solche aus einwandigen stranggepreßten Aluminium-Profilen oder auch aus Metallprofilen aus Stahlblech für die Schubladenherstellung verwendet, bei denen eine verdeckte Anordnung des Frontblenden-Befestigungsbeschlages im hohlen Innern nicht möglich ist.

Der Erfindung liegt die Aufgabe zugrunde, einen Befestigungsbeschlag für die Frontblenden von Schubladen anzugeben, der eine einerseits starre, aber in den erforderlichen Koordinatenrichtungen einstellbare Befestigung der Frontblenden an einwandigen Schubladen-Seitenwänden, und zwar sowohl dünnwandigen Seitenwänden aus Metall als auch hölzernen Seitenwänden ermöglicht und dabei relativ geringe Abmessungen und einen einfachen Aufbau aufweist und somit preisgünstig herstellbar ist.

Ausgehend von einem Beschlag der eingangs erwähnten Art wird diese Aufgabe erfindungsgemäß dadurch gelöst, daß der Halterungsteil einen von der Außenfläche der Schubladen-Seitenwand vortretenden Halterungszapfen aufweist, dessen Durchmesser etwas kleiner als die in horizontaler Richtung gemessene Breite des Längsschlitzes und dessen über die Außenfläche der Schubladen-Seitenwand vortretende Höhe etwas kleiner als die Dicke der Befestigungslasche ist, und daß in der Stirnfläche des Halterungszapfens eine Gewindebohrung vorgesehen ist, in welche der Schaft einer Befestigungsschraube eingeschraubt ist, die bis in direkte oder indirekte spannende Anlage ihres Kopfs an die seitenwandabgewandte Außenfläche der Befestigungslasche in den Halterungszapfen einschraubbar ist. Die Befestigung der Frontblende an der zugeordneten Schubladen-Seitenwand erfolgt also dadurch, daß - bei teilweise herausgedrehter Befestigungsschraube - das offen mündende Ende des Längsschlitzes über den von der Außenfläche der zugeordneten Schubladen-Seitenwand vortretenden Halterungszapfen in den Längsschlitz geschoben wird, bis die gewünschte Höhenlage der Blende in bezug auf den Schubladenkasten erreicht ist. Zur Fixierung der Schubladenblende in dieser Höheneinstellung wird dann die Befestigungsschraube angezogen.

Der Längsschlitz mündet vorzugsweise in der unteren Begrenzungskante der Befestigungslasche offen, um die Montage der Schubladenblende so zu ermöglichen, daß diese von oben auf den Halterungszapfen aufsetzbar ist. Somit ist ausgeschlossen, daß die Schubladenblende nach dem Ansetzen aufgrund ihres Eigengewichts wieder vom Halterungszapfen gelöst wird, was bei einer entgegengesetzten Anordnung des Längsschlitzes an der oberen Begrenzungskante denkbar wäre.

Die Befestigungslasche tritt zweckmäßig von einem Befestigungsflansch vor, an welchem wenigstens eine Durchgangsöffnung für jeweils eine in die Frontblende einschraubbare Befestigungsschraube vorgesehen ist. Dabei hat bzw. haben die Durchgangsöffnung(en) zweckmäßig die Form eines in horizontaler Richtung verlaufenden Langlochs, wodurch eine Querverstellung der Frontblende in dem durch die Langlöcher vorgegebenen Bereich möglich ist.

Die Übertragung der Spannkraft der angezogenen Befestigungsschraube auf die Befestigungslasche erfolgt vorzugsweise durch eine an der Befestigungsschraube vorgesehene, im Durchmesser vergrößerte und sich beim Anziehen auf der seitenwandabgewandten Flachseite der Befestigungslasche auflegende Unterlegscheibe, um so den Anpreßdruck flächig auf die Befestigungslasche zu übertragen und eine Beschädigung der Befestigungslasche im Bereich des Längsschlitzes durch den sich beim Anziehen drehenden Schraubenkopf zu vermeiden.

Besonders vorteilhaft ist eine Weiterbildung der Erfindung, bei welcher die frontblendenabgewandte Begrenzung des Längsschlitzes in der Befestigungslasche im Übergangsbereich zur seitenwandabgewandten Flachseite mit einer als Anzugsschräge wirkenden schrägen Übergangsfläche versehen ist. Beim Anziehen der Befestigungsschraube stützt sich der Rand der Unterlegscheibe (oder auch des Kopfs der Befestigungsschraube selbst) auf dieser Übergangsfläche ab, wodurch zwischen der Übergangsfläche und der Befestigungsschraube eine Keilwirkung entsteht, welche die Befestigungslasche in Richtung der Schubladen-Rückwand zieht. Somit wird die Frontblende gegen die vorderen Stirnflächen der Schubladen-Seitenwände gezogen und stabilisiert den Schubladenkasten. Es ist klar, daß dieser Anzug der Befestigungslasche erfordert, daß der Halterungszapfen innerhalb des Längsschlitzes seitliches Spiel hat, d.h. daß der Längsschlitz breiter als der Durchmesser des Halterungszapfens sein muß.

Der frontblendenseitig an den Längsschlitz der Befestigungslasche anschließende Bereich der seitenwandabgewandten Flachseite der Befestigungslasche wird dagegen als seitenwandparallele Andrückfläche ausgebildet, d.h. der Kopf der Befestigungsschraube bzw. die Unterlegscheibe übt auf dieser Seite des Begrenzungsschlitzes eine die Befestigungslasche in Anlage an die Schubladen-Seitenwand drängende Kraft aus.

An der seitenwandabgewandten Flachseite der Befestigungslasche wird mit Vorteil ein vortretender Anschlag vorgesehen, an welchem der Kopf der Befestigungsschraube bzw. der Rand der Unterlegscheibe in einer vorgegebenen senkrechten Soll-Positionierungsstellung der Befestigungslasche relativ zu dem in ihren Längsschlitz eingreifenden Halterungszapfen anliegt. Beim Aufsetzen der Frontblende auf den Schubladenkasten wird die Frontblende deshalb zwangsläufig in die Soll-Positionierungsstellung geführt, und kann in der Regel sofort durch Anziehen der Befestigungsschraube fixiert werden.

Für den Fall, daß eine von der Soll-Positionierungsstellung abweichende Montage der Frontblende am Schubkasten erforderlich wird, empfiehlt es sich, den Anschlag entfernbar auszubilden, und zwar wird der Anschlag vorzugsweise als im oberen Endbereich des Längsschlitzes von der Befestigungslasche vorstehender, abbrechbarer Stift ausgebildet.

Die möglichst starre und belastbare Befestigung des Halterungsteils an der Schubladen-Seitenwand wird vorzugsweise dadurch erreicht, daß der Halterungszapfen eine komplementäre Öffnung in der Schubladen-Seitenwand durchsetzt.

Am seitenwandseitigen Ende des Halterungszapfens weist der Halterungsteil dann vorzugsweise einen im Durchmesser vergrößerten Flansch auf, der in der bestimmungsgemäßen Befestigungsstellung des Halterungsteils an der Seitenwand also auf der Innenfläche der zugehörigen Schubladen-Seitenwand aufliegt und den Halterungszapfen gegen Herausziehen aus der zugehörigen Öffnung in der Seitenwand sichert. Die Festlegung des Halterungsteils in entgegengesetzter Richtung, d.h. gegen ein Herausdrücken des Halterungszapfens in Richtung des Schubladeninnern kann entweder durch eine entsprechend stramme Passung des Halterungszapfens in der zugeordneten Öffnung der Schubladen-Seitenwand oder - bei Schubladen-Seitenwänden aus einem Metallprofil - auch durch eine zusätzliche Verbindungstechnik, wie Verschweißen, Löten oder auch Verstemmen erfolgen.

Zweckmäßig weist der Halterungszapfen einen im wesentlichen kreisförmigen Querschnitt auf, der an seinem der frontblendenseitigen Begrenzung des Längsschlitzes zugeordnete Seite jedoch mit einer ebenen Anflächung versehen ist.

Nach der erfolgten lagegerechten Befestigung der Frontblende am Schubladenkasten wird dann zweckmäßig auf den Beschlag eine Abdeckkappe aufgesetzt. Diese Abdeckkappe kann aus dünnem Kunststoff hergestellt und auf dem Beschlag aufrastbar ausgebildet sein, da sie keine Befestigungskräfte übertragen muß.

Die Erfindung ist in der folgenden Beschreibung eines Ausführungsbeispiels in Verbindung mit der Zeichnung näher erläutert, und zwar zeigt:
- Fig. 1: eine perspektivische Explosionsansicht, in welcher ein Eckabschnitt der Frontblende und der Vorderteil der zugehörigen Schubladen-Seitenwand mit dem jeweils zugeordneten Beschlagteil gezeigt sind;
- Fig. 2: eine Schnittansicht des montierten Beschlages, gesehen in Richtung der Pfeile 2-2 in Fig. 1;
- Fig. 3: eine Ansicht des an der Schubladen-Seitenwand montierten Beschlages, gesehen in der durch die Pfeile 3-3 in Fig. 1 veranschaulichten Blickrichtung; und
- Fig. 4: eine Schnittansicht entlang der Pfeile 4-4 in Fig. 2.

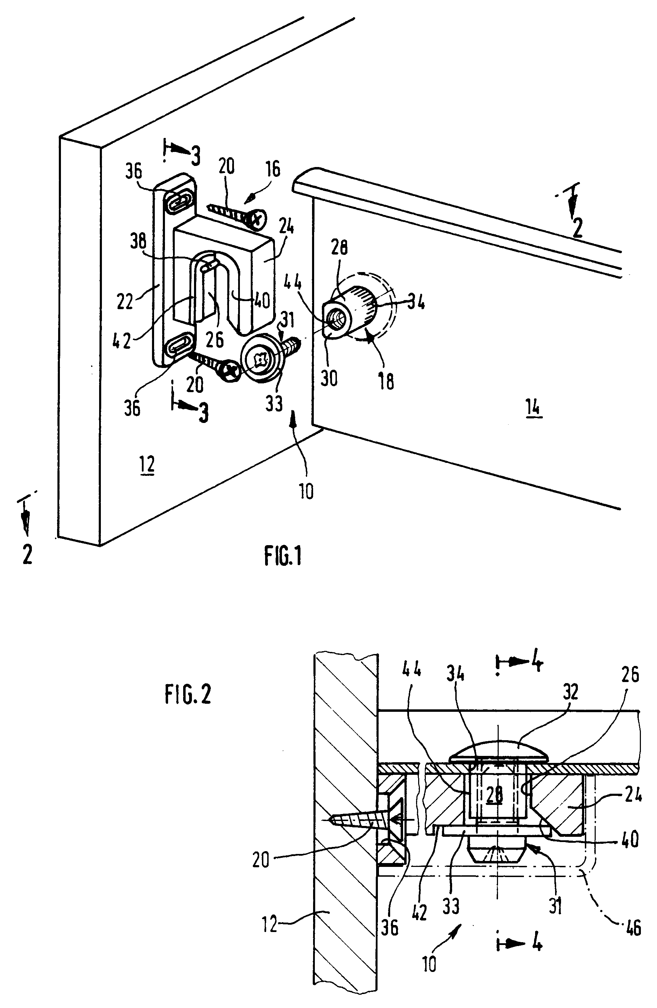

In Figur 1 ist ein in seiner Gesamtheit mit 10 bezeichnetes Ausführungsbeispiel eines erfindungsgemäßen Befestigungsbeschlages gezeigt, wobei von der an der Schublade zu befestigenden Frontblende 12 nur deren Eckbereich und von der Schublade nur der Anschlußbereich der - in diesem Fall von einem einwandigen Metallprofil gebildeten - Schubladen-Seitenwand 14 dargestellt sind. Der Beschlag 10 weist einen an der Innenfläche der zu befestigenden Frontblende 12 befestigbaren Befestigungsteil 16 und einen an der Schubladen-Seitenwand 14 befestigbaren Halterungsteil 18 auf.

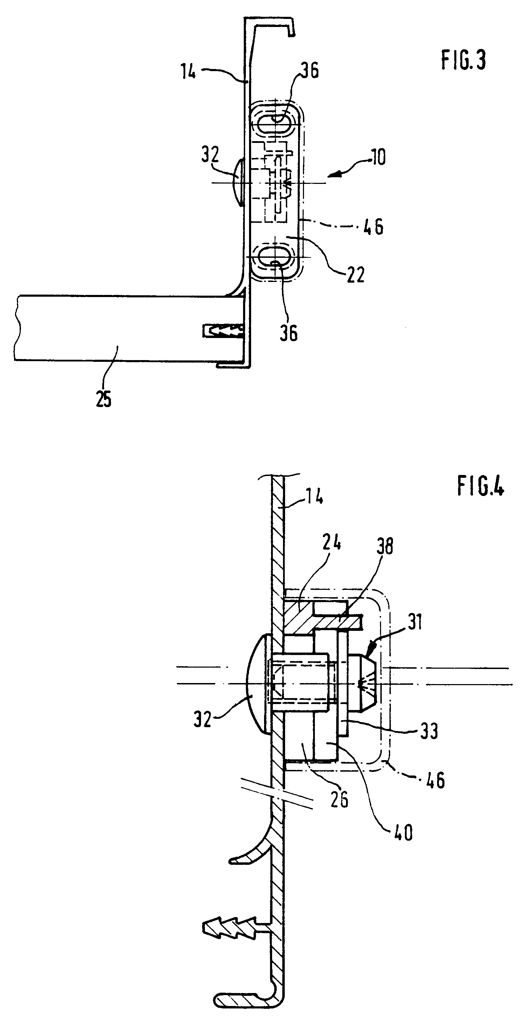

Der Befestigungsteil 16 setzt sich aus einem mittels Befestigungsschrauben 20 auf der Frontblenden-Innenfläche aufschraubbaren Befestigungsflansch 22 und einer etwa mittig und rechtwinklig zur Innenfläche vorstehenden flachen Befestigungslasche 24 zusammen. Die Anbringung des Befestigungsteils 16 an der Innenfläche der Frontblende erfolgt so, daß die Flachseite der Befestigungslasche 24 rechtwinklig zur Frontblenden-Innenfläche und zum Schubladen-Boden 25 (Fig. 3) verläuft. Die Befestigungslasche 24 weist einen an einer Seite offen in der unteren Begrenzungskante mündenden, in parallelem Abstand zur Blenden-Innenfläche verlaufenden Längsschlitz 26 auf, der über einen von der Seitenwand 14 vorstehenden Halterungszapfen 28 des Halterungsteils 18 geschoben wird. Im Halterungszapfen 28 ist eine in dessen freier Stirnfläche mündende Gewindebohrung 30 vorgesehen, in welche eine Befestigungsschraube 31 einschraubbar ist, unter deren Kopf eine Unterlegscheibe 33 unverlierbar, jedoch drehbar gehalten ist.

Der Halterungsteil 18 weist an seiner anderen, d.h. der Mündung der Gewindebohrung 30 gegenüberliegenden Stirnfläche einen einstückig angeformten Flansch 32 auf. Die Befestigung des Halterungsteils an bzw. in der Seitenwand 14 erfolgt in einer durchgehenden Öffnung 34 in der Seitenwand, deren Querschnitt dem Querschnitt des Halterungszapfens 28 entsprechend bemessen ist, wobei die Passung zwischen dem Halterungszapfen 28 und der Öffnung 34 so gewählt ist, daß der in die Öffnung eingepreßte Halterungszapfen in der Öffnung 34 durch eine Preßpassung gehalten ist. Eine zusätzliche Befestigung des Halterungsteils 18 durch Verschweißung oder Verlötung des Flanschs 32 mit der Seitenwand 14 oder auch eine Verstemmung des Halterungszapfens 28 mit dem umgebenden Material der Schubladen-Seitenwand ist möglich, jedoch in der Regel nicht erforderlich.

Der Befestigungsflansch 22 des Befestigungsteils 16 weist in seinem oberen und unteren, die Befestigungslasche 24 überragenden Endbereich in horizontaler Richtung verlaufende (angesenkte) Langlöcher 36 auf, welche eine Befestigung des Befestigungsteils in unterschiedlichen Horizontalstellungen auf der Innenfläche der Frontblende ermöglichen. Bei gelockerten Befestigungsschrauben 20 ist also eine Querverschiebung der Frontblende 12 relativ zum Befestigungsteil 16 und somit eine Einstellung der Frontblende in horizontaler Richtung möglich.

Die hierzu rechtwinklige Einstellung der Frontblende in senkrechter Richtung erfolgt durch Festlegung der Befestigungslasche 24 in entsprechend wählbaren Höhenstellungen auf dem Halterungszapfen 28, dessen von der Seitenwand 14 vorstehende Länge etwas kleiner als die Dicke der Befestigungslasche gewählt ist, so daß die über die Unterlegscheibe 33 beim Anziehen der Befestigungsschraube 31 auf die schubladenabgewandte Außenfläche der Befestigungslasche 24 abgestützte Anzugskraft der Befestigungsschraube ein festes Andrücken der Befestigungslasche 24 an der Schubladen-Seitenwand 14 zur Folge hat.

Am geschlossenen oberen abgerundeten Ende des Längsschlitzes 26 ist ein abbrechbarer Stift 38 vorgesehen, an dem sich die Umfangsfläche der Unterlegscheibe 33 beim Einhängen der Befestigungslasche auf dem Haltezapfen 28 anlegt und die Befestigungslasche dann in einer vorgegebenen Einschubstellung relativ zum Halterungszapfen vormontiert hält. Falls eine Verstellung der Frontblende 12 in Abwärtsrichtung erforderlich ist, ist der in seinem Übergangsbereich zur Befestigungslasche 24 durch eine Sollbruchstelle geschwächte Stift 38 abbrechbar, so daß die Befestigungslasche dann weiter über den Halterungszapfen 28 in Abwärtsrichtung geschoben und - bei Erreichen der gewünschten Frontblenden-Einstellung - durch Anziehen der Befestigungsschraube 31 fixierbar ist.

Um zu erreichen, daß beim Anziehen der Befestigungsschraube 31 auf die Befestigungslasche 24 ein die Schubladenblende in feste Anlage an die zugewandte Stirnseite der Schubladen-Seitenwand 14 andrückender Anzug erreicht wird, ist die frontblendenabgewandte Begrenzung des Längsschlitzes 26 im Übergangsbereich zur seitenwandabgewandten Flachseite der Befestigungslasche mit einer als Anzugsschräge wirkenden schrägen Übergangsfläche 40 versehen, auf welcher sich der äußere Rand der Unterlegscheibe 33 abstützt. Es ist nunmehr klar, daß beim Anziehen der Befestigungsschraube die Unterlegscheibe gleichzeitig in Abwärtsrichtung gedrängt wird und das Bestreben hat, auf der schrägen Übergangsfläche 40 hinabzugleiten. Dadurch wird der gewünschte Anzug der Befestigungslasche erhalten.

Auf der frontblendenseitig an den Längsschlitz der Befestigungslasche anschließenden Bereich der seitenwandabgewandten Flachseite der Befestigungslasche ist keine entsprechende Übergangsfläche vorgesehen, sondern dieser Bereich ist als seitenwandparallele Andrückfläche 42 ausgebildet, auf welcher die seitenwandzugewandte Unterseite der Unterlegscheibe 33 flächig abgestützt ist und den Anpreßdruck der Befestigungsschraube flächig auf die Befestigungslasche überträgt.

Insbesondere in Figur 2 ist erkennbar, daß der Längsschlitz 26 in horizontaler Richtung eine etwas größere Breite als der in dieser Richtung gemessene Durchmesser des Halterungszapfens 28 hat. Dies wird beim gezeigten Ausführungsbeispiel dadurch erreicht, daß der an sich kreisquerschnittsförmige Halterungszapfen 28 mit einem der Breite des Längsschlitzes entsprechenden Durchmesser an der der frontblendenseitigen Begrenzung des Längsschlitzes zugeordneten Seite mit einer ebenen Anflächung 44 versehen ist. Das bei der Bildung dieser Anflächung 44 vom Halterungszapfen 28 abgenommene Material hat zur Folge, daß das erforderliche Spiel des Halterungszapfens 28 in horizontaler Richtung im Längsschlitz 26 erhalten wird.

In den Figuren 2 bis 4 ist dann noch erkennbar, daß der Beschlag 10 nach einer korrekten Ausrichtung und Befestigung der Frontblende 12 an der Schubladen-Seitenwand durch eine - in den erwähnten Figuren strichpunktiert dargestellte - Abdeckkappe 46 abgedeckt ist. Diese Abdeckkappe 46 übernimmt selbst keinerlei Befestigungsaufgaben, sondern dient lediglich dazu, den Beschlag zu verdecken. Sie kann daher ohne weiteres preiswert aus Kunststoff hergestellt werden, wobei ihre Befestigung durch Aufrasten auf den Befestigungsflansch 22 des Befestigungsteils 16 möglich ist.

## Patentansprüche

1. Beschlag für die verstellbare Befestigung der Frontblende (12) einer Schublade an deren Seitenwänden (14) mit einem an der Frontblende anbringbaren Befestigungsteil (16) und einem lösbar mit dem Befestigungsteil (16) verbindbaren, an der zugehörigen Schubladen-Seitenwand (14) vorgesehenen Halterungsteil (18), wobei das Befestigungsteil (16) eine im wesentlichen rechtwinklig von der Innenfläche der Frontblende (12) vortretende Befestigungslasche (24) mit parallel zur Schubladen-Seitenwand (14) verlaufenden Flachseiten aufweist, in welcher ein im wesentlichen parallel zur Innenfläche der Frontblende (12) senkrecht verlaufender und an einem Ende offen mündender Längsschlitz (26) vorgesehen ist,
**dadurch gekennzeichnet,**
daß das Halterungsteil (18) einen von der Außenfläche der Schubladen-Seitenwand (14) vortretenden Halterungszapfen (28) aufweist, dessen Durchmesser etwas kleiner als die in horizontaler Richtung gemessene Breite des Längsschlitzes (26) und dessen über die Außenfläche der Schubladen-Seitenwand (14) vortretende Höhe etwas kleiner als die Dicke der Befestigungslasche (24) ist, und
daß in der Stirnfläche des Halterungszapfens (28) eine Gewindebohrung (30) vorgesehen ist, in welcher der Schaft einer Befestigungsschraube (31) eingeschraubt ist, die bis in direkte oder indirekte spannende Anlage ihres Kopfes an die seitenwandabgewandte Außenfläche der Befestigungslasche (24) in den Halterungszapfen (28) einschraubbar ist.

2. Beschlag nach Anspruch 1, dadurch gekennzeichnet, daß der Längsschlitz (26) in der unteren Begrenzungskante der Befestigungslasche (24) offen mündet.

3. Beschlag nach Anspruch 1 oder 2, dadurch gekennzeichnet, daß die Befestigungslasche (24) von einem Befestigungsflansch (22) vortritt, in welchem wenigstens eine Durchgangsöffnung für jeweils eine in die Frontblende einschraubbare Befestigungsschraube (20) vorgesehen ist.

4. Beschlag nach Anspruch 3, dadurch gekennzeichnet, daß die Durchgangsöffnung(en) die Form eines in horizontaler Richtung verlaufenden Langlochs (36) hat bzw. haben.

5. Beschlag nach einem der Ansprüche 1 bis 4, dadurch gekennzeichnet, daß die in die Gewindebohrung (30) einschraubbare Befestigungsschraube (31) mit einer im Durchmesser vergrößerten, sich beim Anziehen auf der seitenwandabgewandten Flachseite der Befestigungslasche (24) abstützenden Unterlegscheibe (33) versehen ist.

6. Beschlag nach einem der Ansprüche 1 bis 5, dadurch gekennzeichnet, daß die frontblendenabgewandte Begrenzung des Längsschlitzes (26) in der Befestigungslasche (24) im Übergangsbereich zur seitenwandabgewandten Flachseite mit einer als Anzugsschräge wirkenden schrägen Übergangsfläche (40) versehen ist.

7. Beschlag nach einem der Ansprüche 1 bis 6, dadurch gekennzeichnet, daß der frontblendenseitig an den Längsschlitz (26) der Befestigungslasche (24) anschließende Bereich der seitenwandabgewandten Flachseite der Befestigungslasche (24) als seitenwandparallele Andrückfläche (42) ausgebildet ist.

8. Beschlag nach einem der Ansprüche 2 bis 7, dadurch gekennzeichnet, daß an der seitenwandabgewandten Flachseite der Befestigungslasche (24) ein vortretender Anschlag vorgesehen ist, an welchem der Kopf der Befestigungsschraube (31) bzw. der Rand der Unterlegscheibe (33) in einer vorgegebenen senkrechten Soll-Positionierungsstellung der Befestigungslasche (24) relativ zu dem in ihren Längsschlitz (26) eingreifenden Halterungszapfen (28) anliegt.

9. Beschlag nach Anspruch 8, dadurch gekennzeichnet, daß der Anschlag entfernbar ist.

10. Beschlag nach Anspruch 9, dadurch gekennzeichnet, daß der Anschlag ein im oberen Endbereich des Längsschlitzes (26) von der Befestigungslasche (24) vorstehender abbrechbarer Stift (38) ist.

11. Beschlag nach einem der Ansprüche 1 bis 10, dadurch gekennzeichnet, daß der Halterungszapfen (28) eine komplementäre Öffnung (34) in der Schubladen-Seitenwand (14) durchsetzt.

12. Beschlag nach Anspruch 11, dadurch gekennzeichnet, daß das Halterungsteil (18) einen am seitenwandseitigen Ende des Halterungszapfens (28) vorgesehenen, im Durchmesser vergrößerten Flansch (32) aufweist.

13. Beschlag nach einem der Ansprüche 1 bis 12, dadurch gekennzeichnet, daß der Halterungszapfen (28) einen im wesentlichen kreisförmigen Querschnitt aufweist, der an seinem der frontblendenseitigen Begrenzung des Längsschlitzes (26) zugeordneten Seite jedoch mit einer ebenen Anflächung (44) versehen ist.

14. Beschlag nach einem der Ansprüche 1 bis 13, gekennzeichnet, durch eine nach der Herstellung der Befestigungsverbindung zwischen dem Befestigungs- und dem Halterungsteil (16; 18) aufsetzbaren, den Beschlag (10) übergreifenden Abdeckkappe (46).

## Claims

1. Fitting for adjustably fastening the front panel (12) of a drawer to its side walls (14) with a fastening member (16), which may be attached to the front panel, and a retaining member (18) which is releasably connectable to the fastening member (16) and is provided on the associated drawer side wall (14), whereby the fastening member (16) has a fastening lug (24), which projects substantially at right angles from the internal surface of the front panel (12), with flat sides which extend parallel to the drawer side wall (14) and in which a longitudinal slot (26) is provided which extends vertically substantially parallel to the internal surface of the front panel (12) and is open at one end, characterised in that the retaining member (18) has a retaining peg (28), which projects from the external surface of the drawer side wall (14) and whose diameter is somewhat smaller than the breadth measured in the horizontal direction of the longitudinal slot (26) and whose height projecting beyond the external surface of the drawer side wall (14) is somewhat smaller than the thickness of the fastening lug (24) and that provided in the end face of the retaining peg (28) there is a threaded bore (30), screwed into which is the shaft of a fastening screw (31) which may be screwed into the retaining peg (28) until its head is in direct or indirect locking engagement with the external surface remote from the side wall of the fastening lug (24).

2. Fitting as claimed in Claim 1, characterised in that the longitudinal slot (26) opens out in the lower limiting edge of the fastening lug (24).

3. Fitting as claimed in Claim 1 or 2, characterised in that the fastening lug (24) projects from a fastening flange (22) in which at least one through opening is provided for a respective fastening screw (20) which may be screwed into the front panel.

4. Fitting as claimed in Claim 3, characterised in that the through opening(s) has or have the shape of an elongate hole (36) extending in the horizontal direction.

5. Fitting as claimed in one of Claims 1 to 4, characterised in that the fastening screw (31), which may be screwed into the threaded bore (30), is provided with a washer (33) of enlarged diameter which, on tightening, bears against the flat side remote from the side wall of the fastening lug (24).

6. Fitting as claimed in one of Claims 1 to 5, characterised in that the edge remote from the front panel of the longitudinal slot (26) in the fastening lug (24) is provided in the transition region with the flat side remote from the side wall with an oblique transition surface (40) acting as a tightening bevel.

7. Fitting as claimed in one of Claims 1 to 6, characterised in that the region of the flat side remote from the side wall of the fastening lug (24) adjacent to the longitudinal slot (26) in the fastening lug (24) on the front panel side is constructed as a pressing surface (22) parallel to the side wall.

8. Fitting as claimed in one of Claims 2 to 7, characterised in that provided on the flat side remote from the side wall of the fastening lug (24) there is a projecting abutment which is engaged by the head of the fastening screw (31) or the edge of the washer (33) in a predetermined desired vertical position of the fastening lug (24) relative to the retaining peg (28) engaging in its longitudinal slot (26).

9. Fitting as claimed in Claim 8, characterised in that the abutment is removable.

10. Fitting as claimed in Claim 9, characterised in that the abutment is a peg (38) which may be broken off and projects from the fastening lug (24) in the upper end region of the longitudinal slot (26).

11. Fitting as claimed in one of Claims 1 to 10, characterised in that the retaining peg (28) passes through a complementary opening (34) in the drawer side wall (14).

12. Fitting as claimed in Claim 11, characterised in that the retaining member (18) has a flange (32) which is of enlarged diameter and is provided on the end closest to the side wall of the retaining peg (28).

13. Fitting as claimed in one of Claims 1 to 12, characterised in that the retaining peg (28) has a substantially circular cross-section but is provided with a flat (44) on its side associated with the edge of the longitudinal slot (26) on the front panel side.

14. Fitting as claimed in one of Claims 1 to 13, characterised by a cover cap (46) which may be placed in position after the production of the fastening connection between the fastening and retaining members (16; 18) and engages over the fitting (10).

## Revendications

1. Ferrure pour la fixation réglable du panneau avant (12) d'un tiroir aux parois latérales (14) de celui-ci avec un élément de fixation (16) se montant sur le panneau avant et un élément de support (18) prévu sur la paroi latérale (14) du tiroir associée et se joignant de manière détachable à l'élément de fixation (16), l'élément de fixation (16) présentant une patte de fixation (24) saillant sensiblement à angle droit de la face intérieure du panneau avant (12), ayant des côtés plats parallèles à la paroi latérale (14) du tiroir et dans laquelle est prévue une fente longitudinale (26) s'étendant verticalement sensiblement parallèlement à la face intérieure du panneau avant (12) et débouchant à une extrémité, caractérisée par le fait que l'élément de support (18) présente un tenon de support (28) saillant de la face extérieure de la paroi latérale (14) du tiroir et dont le diamètre est un peu inférieur à la largeur mesurée dans la direction horizontale de la fente longitudinale (26) et la hauteur saillant de la face extérieure de la paroi latérale (14) du tiroir est un peu inférieure à l'épaisseur de la patte de fixation (24), et que dans la face frontale du tenon de support (28) est prévu un trou taraudé (30) dans lequel est vissée la tige d'une vis de fixation (31) qui peut être vissée dans le tenon de support (28) jusqu'à appui serrant direct ou indirect de sa tête contre la face extérieure opposée à la paroi latérale de la patte de fixation (24).

2. Ferrure selon la revendication 1, caractérisée par le fait que la fente longitudinale (26) débouche au bord de limitation inférieur de la patte de fixation (24).

3. Ferrure selon l'une des revendications 1 et 2, caractérisée par le fait que la patte de fixation (24) fait saillie d'une bride de fixation (22) dans laquelle est prévue au moins une ouverture de passage pour une vis de fixation (20) pouvant être vissée dans le panneau avant.

4. Ferrure selon la revendication 3, caractérisée par le fait que l'ouverture ou les ouvertures de passage a, ou ont, la forme d'un trou allongé horizontal (36).

5. Ferrure selon l'une des revendications 1 à 4, caractérisée par le fait que la vis de fixation (31) se vissant dans le trou taraudé (30) est pourvue d'une rondelle de plus grand diamètre (33) qui, lors du serrage, s'appuie sur le côté plat opposé à la paroi latérale de la patte de fixation (24).

6. Ferrure selon l'une des revendications 1 à 5, caractérisée par le fait que la limitation opposée au panneau avant de la fente longitudinale (26) de la patte de fixation (24) est, dans la zone de raccordement au côté plat opposé à la paroi latérale, pourvue d'une surface oblique de raccordement (40) faisant office de chanfrein de serrage.

7. Ferrure selon l'une des revendications 1 à 6, caractérisée par le fait que la zone du côté plat opposé à la paroi latérale de la patte de fixation (24) qui est contigue du côté du panneau avant à la fente longitudinale (26) de la patte de fixation (24) constitue une surface de serrage (42) parallèle à la paroi latérale.

8. Ferrure selon l'une des revendications 2 à 7, caractérisée par le fait que, sur le côté plat de la patte de fixation (24) opposé à la paroi latérale, est prévue une butée saillante contre laquelle la tête de la vis de fixation (31) ou le bord de la rondelle (33) s'appuie dans une position de positionnement prescrite verticale fixée de la patte de fixation (24) par rapport au tenon de support (28) s'engageant dans la fente longitudinale (26) de celle-ci.

9. Ferrure selon la revendication 8, caractérisée par le fait que la butée est amovible.

10. Ferrure selon la revendication 9, caractérisée par le fait que la butée est une tige cassable (38) saillant de la patte de fixation (24) dans la zone d'extrémité supérieure de la fente longitudinale (26).

11. Ferrure selon l'une des revendications 1 à 10, caractérisée par le fait que le tenon de support (28) passe par une ouverture complémentaire (34) faite dans la paroi latérale (14) du tiroir.

12. Ferrure selon la revendication 11, caractérisée par le fait que l'élément de support (18) présente une bride de plus grand diamètre (32) prévue à l'extrémité côté paroi latérale du tenon de support (28).

13. Ferrure selon l'une des revendications 1 à 12, caractérisée par le fait que le tenon de support (28) a une section sensiblement circulaire qui est pourvue d'un plat (44) sur son côté associé à la limitation côté panneau avant de la fente longitudinale (26).

14. Ferrure selon l'une des revendications 1 à 13, caractérisée par un chapeau (46) coiffant la ferrure (10) qui peut être posé après la réalisation de la liaison de fixation entre l'élément de fixation (16) et l'élément de support (18).
